## Europäisches Patentamt

(19) **European Patent Office**

**Office européen des brevets**

(11) Veröffentlichungsnummer: **0 181 013**
**A2**

# (12) EUROPÄISCHE PATENTANMELDUNG

(21) Anmeldenummer: **85201397.8**

(22) Anmeldetag: **05.09.85**

(51) Int. Cl.⁴: **G 01 K 17/06**

---

(30) Priorität: **06.09.84 NL 8402719**

(43) Veröffentlichungstag der Anmeldung:
**14.05.86** Patentblatt **86/20**

(84) Benannte Vertragsstaaten:
**AT BE CH DE FR GB IT LI NL SE**

(71) Anmelder: **SETTELS BV**
**Narcissenveld 13**
**Castricum(NL)**

(72) Erfinder: **Settels, Antonius Fredericus Carolus Maria**
**Narcissenveld 13**
**Castricum(NL)**

(74) Vertreter: **Koomen, Jan, Ir.**
**Kennemerstraatweg 35**
**NL-1814 GB Alkmaar(NL)**

---

(54) **Verfahren zur Bestimmung der von einem Radiator einer Zentralheizungsanlage abgegebenen Wärmemenge während einer Zeitperiode.**

(57) Verfahren und Vorrichtung zur Bestimmung der von einem Radiator einer Zentralheizanlage abgegebenen Wärmemenge während einer Zeitperiode, wobei die Öffnungszeiten des Radiatorventils registriert werden und mit einem durch die Radiatorleistung (kapazität) und/oder den Temperaturabfall über den Radiator und/oder die durchfliessende Menge Erwärmungsflüssigkeit bestimmten Faktor multipliziert werden.

EP 0 181 013 A2

Verfahren zur Bestimmung der von einem Radiator einer Zentralheizunganlage abgegebenen Wärmemenge während einer Zeitperiode, somit Zentralheizunganlage für Anwendung dieses Verfahrens.

Die Erfindung betrifft ein Verfahren und eine Vorrichtung zur Bestimmung der von einem Radiator einer Zentralheizunganlage abgegebenen Wärmemenge während einem Zeitraum.

In Gebäuden, wie Etagewohnunggebäuden (Flats), in denen eine grössere Zahl Wohneinheiten oder Appartemente untergebracht ist, werden in der Regel von einer gemeinsamen Zentralheizunganlage geheizt. Die Heizkosten werden dabei in der Regel mehr oder weniger verteilt auf die Bewohner der Appartemente mit einer möglichen Korrektion hinsichtlich der grösse des Appartementes oder der Wohneinheit. So werden die Heizkosten für die Bewohner von in Grösse gleiche Wohneinheiten in gleicher Weise den Bewohnern in Anschlag gebracht. Jedoch ist der Heizbedarf bei den unterschiedlichen Appartementen stark abhängig der Lage dieser Appartemente.

So wird der Wärmebedarf für die Appartemente im obenen Wohngeschoss von z.b. einem Etagewohnungengebäude grösser sein als der Wärmebedarf jener Appartemente, welche sich mehr zwischen dem unteren und dem oberen Wohngeschoss befinden. Ein weiteres, sehr beträchtliches Bedenken des mehr oder weniger persönlichen umlegen der Heizungskosten liegt darin, dass die Bewohner der Appartemente sich überhaupt keine Sorge machen über den Wärmeverbrauch in ihren Appartement, weil dieser Wärmeverbrauch kein einziger Einfluss hat auf den Heizkosten die ihnen in Anschlag gebracht werden.

So ist es sehr wohl möglich, dass die Bewohner der Appartemente die sich darin befindlichen Radiatoren nie abschliessen, sondern die Temperatur in den Appartementen regeln durch das Öffnen der Türe und Fenster, und wobei selbstverständlich sehr viel Wärme unbenutzt verloren geht.

Um diese Beschwerden der mehr oder weniger ungerechtigten Verteilung der Heizkosten über die Bewohner der diversen Appartemente zu beseitigen, werden immer mehr bei den mehrere Wohneinheiten enthältenden Gebäuden, welche mit einer einzigen Zentralheizunganlage geheizt werden, diese einzige Zentralheizunganlage ersetzt durch separate, jede bei einer Wohneinheit
gehörenden, kleinere Zentralheizunganlagen.

Dieses Ersetzen der einzigen, grösseren Zentralheizunganlage
durch eine relativ grosse Zahl kleinerer separaten Zentralheizunganlagen bringt ausserordentlich viel kosten mit sich.
So hat jede, kleinere separate Zentralheizunganlage einen
eigenen Kessel, welche wieder einen eigenen Abgaskanal
haben muss, und worin im Gebäude nicht vorgesehen ist.

Auch ist es möglich die Wärmezufuhr vonab der grosseren
Zentralheizunganlage eines, mehrere Wohneinheiten enthältenden
Gebäude nach jede Wohneinheit fortwährend mit einer Wärmemenge
Messvorrichtung zu messen über einen bestimmten Zeitraum um
damit der eigentliche Wärmeverbrauch in der betriffenden
Wohneinheit zu bestimmen und darauf die Kosten dieses Wärmeverbrauches an den Bewohnern der Wohneinheit in Anschlag
bringen zu können. Die dazu erforderlichen Installationen
und Messvorrichtungen sind jedoch sehr kostspielig.

Die Erfindung schaft ein Verfahren und eine Vorrichtung
mittels dessen und deren die von einem Radiator einer Zentralheizunganlage abgegebene Wärmemenge während eines Zeitraums
in einfacher  Weise festgestellt werden kann.
Das erfindungsgemässe Verfahren wird dadurch gekennzeichnet,
dass die Öffnungszeiten des Radiatorventils registriert werden
und mit einem Faktor des Radiators multipliziert werden.

Der Faktor des Radiators, mit dem die während einem bestimmten
Zeitraum summierten Öffnungszeiten des Radiatorventils
multipliziert werden müssen um damit der Wärmeverbrauch durch
den Radiator über den erwähnten Zeitraum zu bestimmen ist,
nach einem Merkmal des erfindungsgemässen Verfahrens eine
Funktion der Leistung des Radiators und/oder des Temperaturabfalls über den Radiator und/oder des Durchflusses der
Erwärmungsflüssigkeit pro Zeiteinheit.
Die Leistung oder Kapazität eines Heizradiators ist eine kennzeichnende Angabe des Radiators, die von dem Radiatorhersteller
für bestimmte Standardumstände angegeben wird.
Im algemeinen sind die Abweichungen in den üblichen Wohneinheiten
von diesen Standardumständen derart geringfügig, dass mit der multiplizierung der summierten Öffnungszeiten über einen bestimmten Zeitraum des Radiatorventils und die Leistung des Radiators bereits eine relativ genaue Bestimmung des Wärmeverbrauches des Radiators über diesen Zeitraum stattfinden kann.

In diesem Fall kann also der Faktor völlig gleich sein an der angegebenen Leistung des Radiators. Auch ist es möglich um in dem Faktor neben der Leistung des Radiators auch den Temperaturabfall über den Radiator und/oder die durchfliessende Menge Heizflüssigkeit pro Zeiteinheit zum Ausdruck zu bringen. Der Temperaturabfall und die durchfliessenden Mengen können in an sich bekannten Weisen gemessen werden.

So könnte die durchfliessende Menge Heizflüssigkeit pro Zeiteinheit in einfacher Weise abgeleitet sein aus dem Druckfall über den Radiator.

Bei einer Ausführungsform des erfindungsgemässen Verfahrens wird der Temperaturabfall über den Radiator konstant gehalten und wird vorzugsweise dieser Temperaturabfall gleich jener sein, wie erwähnt unter den Standardverhältnissen wofür die vom Hersteller des Radiators angegebene Leistung gilt.

Auch ist es möglich die durchfliessende Menge Heizflüssigkeit pro Zeiteinheit bei geöffnetem Radiatorventil konstant zu halten durch in der Zufuhrleitung oder der Abfuhrleitung des Radiators ein sogenanntes Fussventil anzuordnen, und womit beim in Betrieb setzen des Radiators bei geöffnetem Radiatorventil die durchfliessende Menge bis auf einem bestimmten Wert abgestellt wird.

Die Zentralheizunganlage für Anwendung des erfindungsgemässen Verfahrens, und welche versehen ist mit einem Heizkessel auf den wenigstens einen Radiator über ein Radiatorventil ist angeschlossen, wird dadurch gekennzeichnet, dass Mittel vorhanden sind, mittels deren die Öffnungszeiten des Radiatorventils durchgegeben werden können an eine Registriervorrichtung.

Das Radiatorventil kann in unterschiedlichen Weisen geöffnet und geschlossen werden. Vorausgesetzt wird, dass das Radiatorventil nur zwei Stände hat, nämlich ein völlig geöffneter Stand und ein völlig geschlossener Stand.

Bei einer Vorzugsausfuhrungsform der erfindungsgemässen Anlage, ist das Radiatorventil elektrisch betätigbar unter Steuerung eines Thermostats.

Bei völlig geöffnetem und/oder völlig geschlossenem Stand des Ventils kann durch dieses ein Signal, insbesondere ein elektrisches Signal durchgegeben werden an die Registriervorrichtung.

Mit dem Registrieren der Öffnungszeiten des Radiatorventils während eines bestimmten Zeitraums, und dem Multiplizieren der summierten Öffnungszeiten mit dem Radiatorfaktor kann der Wärmeverbrauch über diesen Zeitraum in einfacher Weise festgestellt werden. Mit dem Bestimmen der Öffnungszeiten sämtlicher Radiatorventile in einer Wohneinheit kann dann wieder in einfacher Weise der Gesamtwärmeverbrauch der Wohneinheit während einer bestimmten Periode berechnet werden um auf grund davon die Heizkosten den Bewohnern des Appartementes in Anschlag bringen zu können. Falls die Registriervorrichtung zu einer Buchhaltmaschine oder zu einem Komputer gehört könnte von dieser oder von diesem in jedem beliebigen Moment der Wärmeverbrauch der Wohneinheit über eine bestimmte Periode festgestellt werden und auf grund davon die an den Bewohnern der Wohneinheit in Rechnung zu bringen Heizkosten abgedruckt werden.

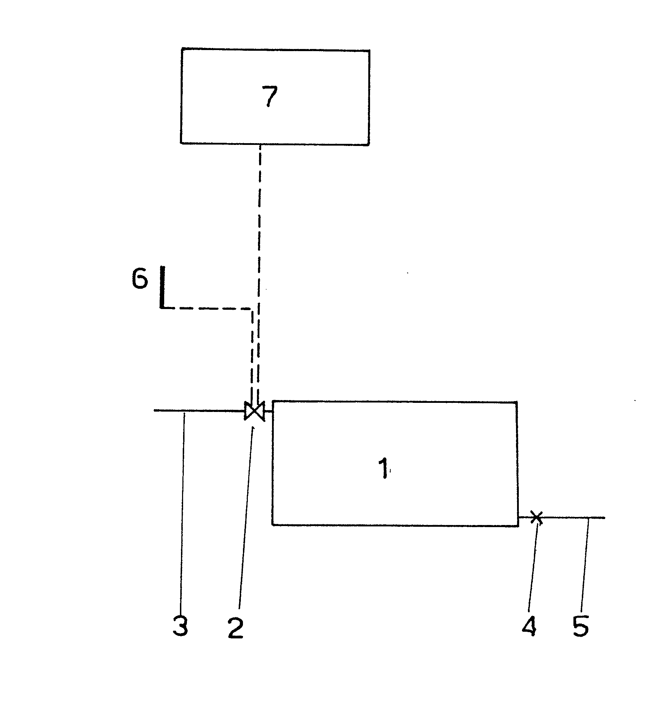

Die Erfindung wird jetzt näher erklärt werden anhand der Zeichnung eines Ausführungsbeispiels.

Wie in der Zeichnung dargestellt, ist der Radiator 1 über das Radiatorventil 2 angeschlossen auf die Zufuhrleitung 3 für die Heizflüssigkeit und über das Fussventil 4 angeschlossen auf die Abfuhrleitung 5. Das Ventil 2 ist elektrisch betätigbar unter Steuerung des Thermostats 6, während der offene Stand des Ventils 2 durchgegeben wird an die Registriervorrichtung 7, welche die Öffnungszeiten des Ventils 2 registriert, summiert und multipliziert mit dem Radiatorfaktor zur Bestimmung des Wärmeverbrauches des Radiators über eine bestimmte Zeitperiode. Mit dem Fussventil 4 wird die durchfliessende Menge Heizflüssigkeit durch den Radiator pro Zeiteinheit bei geöffnetem Radiatorventil bis auf einen bestimmten Wert abgestellt.

Patentansprüche

1. Verfahren zur Bestimmung der von einem Radiator einer Zentralheizunganlage abgegebenen Wärmemenge während einer Zeitperiode, dadurch gekennzeichnet, dass die Öffnungszeiten des Radiatorventils registriert werden und mit einem Faktor des Radiators multipliziert werden.

2. Verfahren nach Anspruch 1, dadurch gekennzeichnet, dass der Faktor eine Funktion ist des Leistung (kapazität) des Radiators, und/oder des Tempersturabfalls über den Radiator und/oder der durchfliessenden Menge Erwärmungsflüssigkeit pro Zeiteinheit.

3. Verfahren nach Anspruch 1 oder 2, dadurch gekennzeichnet, dass der Temperaturabfall über den Radiator konstant gehalten werd.

4. Zentralheizunganlage für Anwendung der Verfahrens nach einem der vorangehenden Ansprüche, bestehend aus einem Heizkessel auf den wenigstens einen Radiator angeschlossen ist, dadurch gekennzeichnet, dass Mittel vorhanden sind, mit Hilfe deren die Öffnungszeiten des Radiatorventils durchgegeben werden können an eine Registriervorrichtung.

5. Zentralheizunganlage nach Anspruch 4, dadurch gekennzeichnet, dass das Radiatorventil elektrisch betätigbar ist unter Steuerung eines Thermostats.

6. Zentralheizunganlage nach Anspruch 4 oder 5, dadurch gekennzeichnet, dass bei geöffnetem und/oder geschlossenem Stand des Radiatorventils von diesem ein Signal, insbesondere ein elektrisches Signal, durchgegeben werden kann an die Registriervorrichtung.

7. Zentralheizungvorrichtung nach einem der vorangehenden Ansprüche, dadurch gekennzeichnet, dass die Registriervorrichtung zu einer Buchhaltmaschine oder zu einem Komputer gehört.